# EUROPEAN PATENT APPLICATION

(11) **EP 1 617 363 A1**
(43) Date of publication of application: **18.01.2006**
(21) Application number: 05012380.1
(22) Date of filing: 08.06.2005
(51) Int. Cl.: G06Q 10/00

(54) **Integrated mail-piece tracking and on-line document viewing**

(30) Priority: 30.06.2004 US 879012
(71) Applicant: Bowe Bell + Howell Company, Durham, NC 27713 (US)
(72) Inventor: Maselli, Michael, Cary, NC 27519 (US)
(74) Representative: Zimmermann, Tankred Klaus

(57) **Abstract**

A system for providing electronic access to tracking information regarding articles processed for mail delivery and related electronic information, might include a mail processing system, data storage and a computer system. The mail processing system processes the articles for mail delivery, and it provides tracking data regarding its processing of each article. Examples of the mail processing system include a printer, an inserter system, a sorter system and a mail delivery system. The data storage stores the tracking data and electronic files containing electronic information corresponding to respective articles processed for mail delivery. The data storage also maintains linkages between the article tracking data and stored files containing the corresponding electronic information. The computer system provides a user with integrated on-line access to the tracking data for the articles and the files containing the corresponding electronic information, based on the linkages.

## Description

### Field of Invention

The present subject matter relates to methods and systems for providing combined or integrated access to tracking data regarding articles to be mailed or shipped and corresponding electronic information.

### Background

Many businesses are sending bills or statements to their customers on a yearly, quarterly, monthly, or even daily basis. For example, a utility company may send millions of bills to their customers every month. As another example, a brokerage firm or other financial institution may send thousands of trade confirmations to their customers, every business day. In either example, each paper document provides information that is both important to the customer and/or a means of revenue collection for the company. Businesses also ship a vast array of other physical articles to customers and prospective customers, including various products as well as advertisement and promotional items. In many cases, these same businesses receive and process responses, such as payments for purchases or for account transactions, through return mail.

Systems have been developed to allow such businesses or other enterprise entities to track various aspects of the mail processing of their articles. Such systems enable tracking of printing and finishing (inserting/sorting) documents, tracking of package preparation, tracking of receipt and progress through the postal or package shipment system, as well as tracking of receipt and processing of responsive mail (both through the postal network and the internal operations of the enterprise itself). The tracking information may be available on-line to agents or representatives of the sender, or the data could reside in a PC or mainframe based application, and some systems offer similar on-line access for intended recipients.

With the rapid growth in data communications and computer capabilities, in the last decade or so, a number of systems have been developed to present information or documents electronically, as an alternative or supplement to the older print mail delivery. Such systems may present the electronic information to agents or representatives of the enterprise, but many such systems now offer presentment to intended document recipients. Electronic presentment, for example, allows an enterprise to notify its customers by e-mail of posting of new statements or invoices to their accounts. Customers may log-in to a web-site via the Internet and view their account information and if desired view soft copies of the actual statement documents. Many such systems used today for billing also offer associated electronic payment options. These electronic presentment systems offer a number of advantages over paper based systems, such as speed and reduction in paper handling and postage costs. Representatives or agents of the enterprise use the electronic information extensively, for example, in call centers to respond to customer telephone inquiries. However, many customers have been slow to sign-up and directly use electronic presentment and payment services; and as a consequence, most enterprises still send virtually all of their customer correspondence in hard-copy form.

In many cases the electronic presentment offers information on-line, while a corresponding package or document mailing is "in the mail" so to speak going through the postal service or carrier network. As noted above, systems have offered the ability for an enterprise's agents or representatives or even intended recipients to check the tracking data regarding the hard-copy item. To date, however, these two information technologies have been entirely separate. No system that offered tracking data regarding the physical article offered electronic presentment of any corresponding electronic information. Conversely, no electronic presentment system offered tracking data regarding processing or mail handling of the corresponding physical article. Consequently, if a user wanted both types of on-line information, the user had to know about and log into both disparate systems and separately query each separate system for the desired electronic version or article tracking data.

### Summary

The concepts discussed herein address problems with divergent systems and methodologies for mail tracking and electronic presentment. Broadly, electronic presentment is linked to or integrated with tracking data regarding processing of corresponding articles for mail delivery.

An exemplary method provides electronic access to tracking data regarding articles processed for mail delivery and to electronic information corresponding to the articles processed for mail delivery. The method involves processing the articles for mail delivery and storing tracking data regarding processing of the articles through one or more stages. The method also entails storing electronic files, which contain electronic information corresponding to respective ones of the articles processed for mail delivery. For each respective article, there is a link established between the stored tracking data for the item and the stored file containing the corresponding electronic information. Electronic access enables a user to access stored tracking data and corresponding stored electronic information, via the linkage therebetween.

In the examples discussed in detail, the articles intended and processed for mail delivery are hard-copy documents, typically printed documents. In those examples, the corresponding electronic information may include electronic or "soft" copies of the documents, processed information derived from electronic copies and/or images of items, e.g. camera shots of envelopes containing finished documents ready for shipment. "Hard-copy" and "soft-copy" terminology may be used here to clearly distinguish between physical articles requiring traditional delivery through the mail or alternate carrier services and the various electronic forms now commonly delivered via modem telecommunications networks or other electronic media, optical media, magnetic media, or the like. The hard-copy items processed for mail delivery and tracking and for which a system offers related on-line information presentment may include traditional print mail pieces including various types of documents, as in the examples, as well as other physical articles such as CDs, DVDs, brochures, packages, floral arrangements, etc.

The mail delivery stream for the articles typically utilizes a traditional postal service, but may be or include a variety of other delivery services, such as those offered by commercial carriers. For purposes of this discussion, mail delivery of articles refers to physical delivery of actual items by a postal service or package delivery carrier. On-line or electronic access or delivery of corresponding electronic or soft-copy information may utilize any convenient form of electronic delivery or presentment, such as web page access or e-mail delivery, as contrasted with the various services providing mail delivery of physical articles.

The method may link on-line presentment of electronic information to tracking data obtained from various systems that prepare items for mailing, handle the items during shipment through the actual mail delivery stream or even handle corresponding return mail. The on-line service can present information and related hard-copy tracking data, for example, to a representative of a sender or mailer of the articles or to intended recipients of the physical articles.

The integrated access process may begin with a request for tracking data regarding a selected item, received from the user. Upon presenting the requested tracking data to the user, the user may select the link to the soft-copy or other corresponding electronic information, i.e. corresponding to the selected article. In response, at least some of the corresponding electronic information is presented to the user. Alternatively, the user may first request information from a selected electronic file. Then, when the user indicates selection of the link to the tracking data, the user receives an electronic presentation of the tracking data regarding the corresponding physical article. Of course, other procedures for linked access are also possible.

Electronic information corresponding to a physical article refers to some form of information that is copied, extracted or derived from the article or from some file representing the article. The electronic information, corresponding to the article, can take various forms. If the article is or includes a document, such as a statement or invoice or a bill of lading for a product shipment, a system may extract and process data from an electronic copy of the document and electronically present the processed data as the corresponding information. For example, if the document is a printed account statement, the system might electronically present the data for the account taken from a print file of the statement as a web page approximation of the statement. Another approach is to present a soft-copy of one or more pages from the actual document, for example, as extracted from a print file of the document. In implementations where some or all of the items to be mailed consist of or include at least some printed documents, it is often convenient to obtain the electronic files containing soft-copy information by converting the print files to a format compatible with communication via a data communication network. Another useful option is to capture an image of the finished article before shipment, e.g. a photo or image scan of the finished envelope or package containing the document or other articles, and present the image to the user electronically upon request.

The concepts disclosed herein may be embodied in various forms, particularly forms implementing any of the methods via appropriate computer technology. For example, the methods summarized above may be implemented using one or more programmed computer platforms. The methods also may be embodied in a program product for execution by a processor or a computer. A software or program product includes information, which may be carried by at least one machine-readable medium. The information carried by the medium may be executable code, one or more tracking databases and/or files containing the electronically presentable information corresponding to the articles.

A computer or machine-readable readable medium, as used herein, may be any physical element or carrier wave, which can bear instructions or code for performing a sequence of steps in a machine-readable form or can bear associated data for processing by a computer or the like. Examples of physical forms of such media include floppy disks, flexible disks, hard disks, magnetic tape, any other magnetic medium, a CD or CD-ROM, DVD or DVD-ROM, any other optical medium, a RAM, a ROM, a PROM, an EPROM, a FLASH-EPROM, any other memory chip or cartridge, as well as media bearing the software in a scannable format. A carrier wave type of medium is any type of signal that may carry digital information representative of the data or the instructions or code for performing the sequence of steps. Such a carrier wave may be received via a wireline or fiber-optic network, via a modem, or as a radio-frequency or infrared signal, or any other type of signal which a computer or the like may receive and decode. Physical media also include the wires, fibers, wireless links, etc. over which such carrier waves flow during communications.

In a related aspect, another relevant product comprises software transportable by at least one such machine readable medium. Here, the software includes article records containing tracking data regarding processing of the articles through one or more stages of processing of the articles for mail delivery. The software also includes files containing electronic information corresponding to respective ones of the articles processed for mail delivery. The software further provides links between article records and corresponding electronic files. The software links enable integrated access to tracking data for each article and electronic information corresponding to each article.

An overall system, for providing electronic access to tracking data regarding articles processed for mail delivery and to electronic information corresponding to the articles processed for mail delivery, might include a mail processing system, data storage and a computer system. The mail processing system processes the articles for mail delivery, and it provides tracking data regarding its processing of each of the articles. The system may utilize or work with a variety of different types of mail delivery processing systems. Examples of such systems include an inserter system, a sorter system and a mail delivery system. The data storage stores the tracking data and files containing electronic information corresponding to respective ones of the articles processed for mail delivery. The data storage also maintains linkages between the stored tracking data for each respective article and the stored file containing the electronic information corresponding to the respective article. The computer system provides a user with on-line access to information in the data storage, including integrated access to the tracking data for the articles and the corresponding electronic information, based on the linkages.

Additional objects, advantages and novel features of various examples will be set forth in part in the description which follows, and in part will become apparent to those skilled in the art upon examination of the following and the accompanying drawings or may be learned by production or operation of the examples. The objects and advantages of the concepts may be realized and attained by means of the methodologies, instrumentalities and combinations particularly pointed out in the appended claims.

### Brief Description of the drawings

The drawing figures depict embodiments of the concepts by way of example, not by way of limitations. In the figures, like reference numerals refer to the same or similar elements.

Fig. 1 is a pictorial/flow diagram useful in explaining integrated collection and dissemination of tracking data and electronic information from documents or other articles intended for mail delivery.

Fig. 2 is a functional block diagram of an example of a system for providing the integrated tracking and electronic information presentment.

Fig. 3 is a flow chart useful in explaining a first procedure for allowing a use linked access to both tracking data and electronic information from a file of a document or other article.

Fig. 4 is an exemplary screen shot illustrating how a user might search for a particular document to view tracking information and a link to the related electronic presentment information.

Fig. 5 is an exemplary screen shot illustrating a linked display of a soft-copy document image, as it might be electronically presented to a requesting user.

Fig. 6 is a flow chart useful in explaining a second procedure for allowing a user linked access to both tracking data and electronic information from a file of a document or other article.

### Detailed Description

The concepts here offer integrated electronic presentment of information related to articles and tracking data regarding processing of corresponding physical articles intended for mail delivery. As noted earlier, an article may be any type of "hard-copy" document or any other item requiring physical delivery to an individual intended as the recipient. For purposes of discussion, however, attention will focus on examples for processing and delivery of printed documents, and associated tracking and electronic presentment of corresponding soft-copy document information.

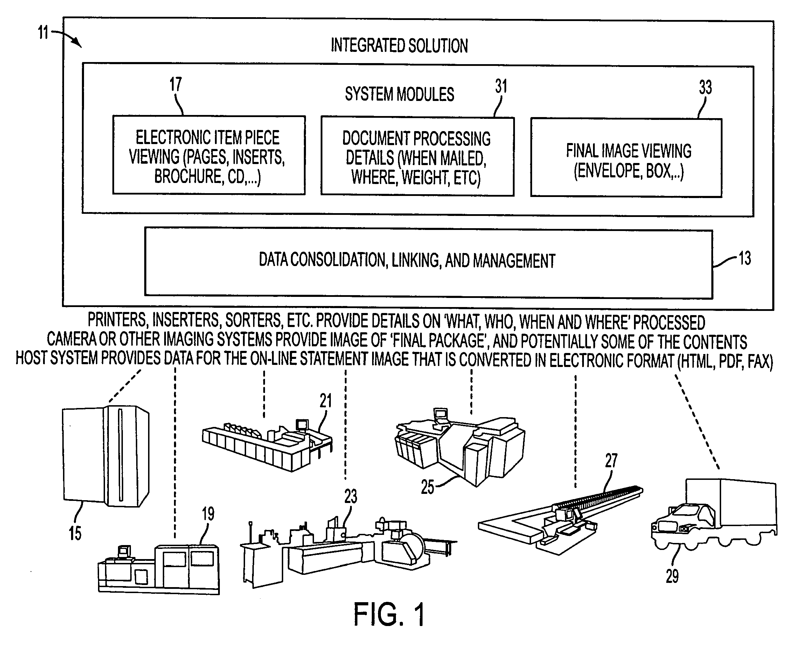

Reference now is made in detail to the presently preferred, examples, which are illustrated in the accompanying drawings and discussed below. Fig. 1 illustrates a service providing on-line access to combined or integrated tracking information regarding print mail delivery and electronic presentment of soft-copy information regarding corresponding electronic documents.

The system 11 offering the integrated solution, shown as blocks in the diagram, comprises software modules running on one or more computer platforms to be discussed later. The software system 11, for example, includes a consolidation module 13 for collecting, processing and managing incoming data from various document processing equipment. The system may utilize or work with a variety of different types of document production, document finishing and mail delivery processing systems.

The system 11 offers on-line access to electronic information files regarding articles for mail delivery and to tracking information regarding corresponding articles processed for physical mail delivery. The illustrated system processes hard-copy items (documents in this example) for mail delivery, and it stores data regarding tracking of the hard-copy items through one or more stages of the processing for physical mail delivery. The system also stores electronic files, which contain corresponding electronic information. In the document processing example, the soft-copy information may be electronic files from which the hard copies were generated, in forms useful for deriving and presenting processed information or in formats that offer views similar to the actual printed products. The electronic files may also include electronic images, for example of finished mail pieces. For each respective hard-copy document, there is a link established between the stored tracking data for the respective item and the stored electronic file containing the corresponding soft-copy information. Electronic access enables a user to access stored tracking data and a stored electronic file for a hard-copy item and corresponding soft-copy information via the linkage therebetween.

In the example, a mainframe or host computer system 15 supplies print files and insert control files for document production. In one example, the computer 15 might run an application to produce outgoing bills or other account statements. The files from the computer 15 are the same as used to print and finish the hard-copy versions of the documents. The module 13 processes the files from the computer 15 for handling and storage by a software module 17. The module 17 may extract certain data for processing, e.g. account statement information. The module also may store a copy of each document file either in original form or in a converted form that facilitates on-line viewing, e.g. in pdf, HTML or XML format.

The data consolidation module 13 also receives tracking data from a number of systems that process each hard-copy document, through various stages of document finishing and one or more stages of the physical delivery process. Illustrated examples of these document processing systems that provide tracking information include a printer 19, various types of inserter system 21, 23 and 25 and a sorter system 27. The inserter 21 inserts previously prepared inserts into or with the printed base documents, and the inserter 21 typically includes a stuffing engine to stuff combined documents (i.e., the printed base documents with the added inserts) into envelopes. The inserter 23 adds inserts to documents and wraps finished documents for mailing. The inserter 25 offers a different inserting and mail finishing function, such as inserting with attendant document binding. Of course other finishing equipment may be used alone or in combination with an inserter. Each of the document finishing systems represented by the exemplary inserters 21, 23 and 25 provides tracking data regarding document integrity and completion of its work on each respective document.

The exemplary system 11 also processes data from a sorter 27. The sorter may be operated by the enterprise or by a contractor. The sorter 27 pre-sorts mail, for example, by destination ZIP code, to obtain mail delivery discounts from the postal service or other mail carrier. Like the inserters, the sorter provides tracking data regarding each piece of mail to the consolidation module 13.

The truck 29 represents the general class of mail delivery systems, which would receive and process the finished documents. The mail delivery system may simply provide a tracking entry indicating that the document left the finishing shop at a particular date and time. However, the mail delivery system may offer additional downstream tracking. The US postal service, for example, tracks mail at various stages of the flow through its systems; and this data may be available and incorporated via the module 13. Similar delivery tracking data may be obtained from commercial carriers, such as FedEx and UPS.

The data provided by the various systems 15, 19, 21, 23, 25, 27 and 29 tracks the processing and delivery of the physical mail that is going out from a company or other enterprise operation. The tracking data is received and processed via the consolidation module 13 and stored and made accessible via module 31. For each mail piece, the tracking data may indicate the number of pages in the document, each insert added to the envelope (with the base document), the date and time it was processed by each respective piece of equipment, each machine on which the document was processed, the facility or location in which it was processed, etc. The tracking data may also indicate 'which envelope' the resulting materials went into. A lot of companies desire such tracking to make sure they use the right envelope stock, e.g. with correct logos, of the right size, etc. If the processing applies postage, the tracking data may also indicate the 'postage amount' applied to the mail piece. The tracking data provides an audit trail of each piece finished and sent out from the enterprise facilities. In the system 11, the consolidation module 13 provides this data to a processing module 31, for on-line access to the document processing details.

Via the processing module 31, the enterprise may use the document tracking data to indicate what mail has been processed and when, what has not been processed, what mail is in-process and for in-process mail the stage of processing. The tracking data also indicates the integrity of each piece, e.g. what documents or other items were actually included with the base document in each envelope. The mail-room manager, for example, uses the tracking data to generate reports on the levels and efficiencies of operations of the finishing/mail room in generating and sending out documents. Customer representatives, or the like, may utilize data for individual documents to answer questions from customers, for example, regarding concerns about a statement or check or invoice they expected but did not receive.

An inserter 21, 23 or 25 may use IntelliCenter™ or MIS™ type software to provide the tracking data. The sorter may utilize Sabre™ or Winsort™ software to provide the tracking data. The electronic presentment program may utilize eRoute™. These existing products are separate software modules. One approach would be to use such modules and link the tracking and soft-copy data, e.g. so that the user might find one piece in one system and link to the data in the other system. A variety of techniques are known for linking the tracking data and the soft-copy files. Of course, another approach would be to write a new integrated program providing linked access to both the tracking data and the electronic document information.

In the example, the system would also include a camera (not shown) for capturing images of finished items, such as envelopes or packages. The data consolidation module supplies the final image data to a software module 33, for storage and later access. In such an implementation, a camera takes a picture of each envelope coming out of the machine, and the snap-shot is stored and available for on-line viewing, e.g. as further evidence that the document was actually sent out.

The system 11 allows the end user or customer representative to view electronic information, in the form of processed data from the document and/or a soft-copy of all or part of the document, derived from the print file via the module 17. Thus, it is possible to see information corresponding to the document that was actually sent. The system 11 offers additional corresponding electronic information, such as a camera image of the document envelope or package taken just before shipment, via the module 33. Via the module 31, the system 11 also offers a variety of tracking data, regarding the integrity of the document and the processing thereof, through the processing stages beginning with the output by the document source 15 and extending through transport in the delivery system represented by outbound shipment on the truck 29. In several examples, this tracking data includes tracking through the postal or other delivery service, not just to truck pickup at the company's location, the tracking may include tracking of a response back to the sender/biller from the recipient.

Hence, the system 11 accumulates electronic information files corresponding to articles for mail delivery and tracking information regarding processing of the corresponding articles, as they progress through various stages of processing for physical mail delivery. The illustrated system then offers on-line electronic access, both to the tracking data and to respective electronic document related information files.

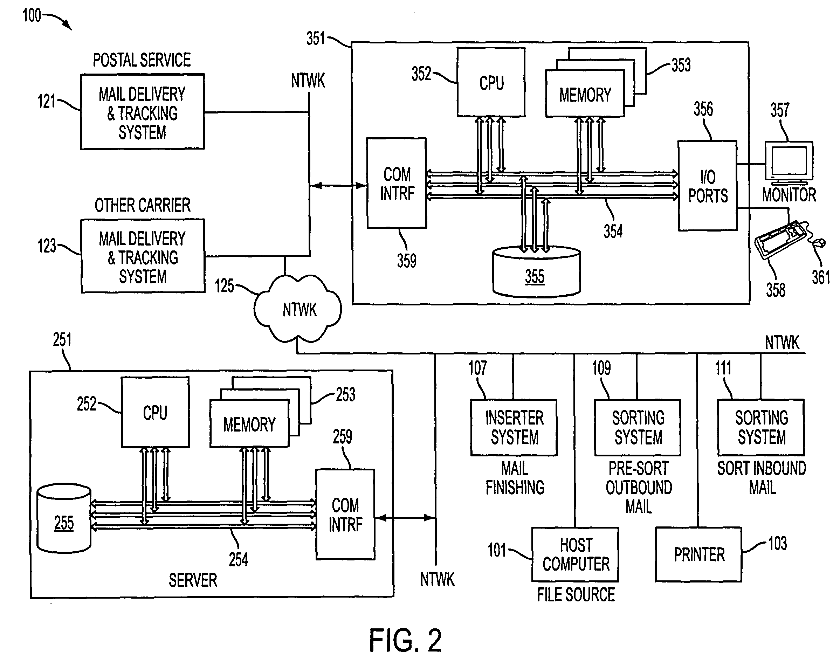

The discussion of Fig. 1 focused on the functional aspects and software to process the data from the mail processing systems. An overall hardware system for providing electronic access to electronic files and to tracking information regarding the articles processed for mail delivery, might include a mail processing system, data storage and one or more computer systems. Fig. 2 shows an example 100 of such an overall system. The overall system 100 includes a number of data processing systems, some of which are operated by the entity performing the tracking and electronic presentment services, and some of which are operated by others who handle or ship documents for the enterprise. The tracking and presentment service may be offered by a service provider to the enterprise that is sending the articles via the mail.

The mail processing system processes the articles intended for mail delivery, and it provides tracking data regarding its processing of each of the physical articles. A number of examples of such processing systems have been discussed earlier. In the example of Fig. 2, a mainframe or host computer 101 supplies print files or other soft copies of documents, as in the earlier example; and the documents are printed via the printer 103 in the normal manner. The example in Fig. 2 includes one or more mail finishing systems represented by the inserter 107, which could be any of the inserters discussed above relative to Fig. 1. Sorters also are provided. In this case, a sorting system 109 pre-sorts finished mail pieces before hand-off thereof to the postal service, typically, to maximize postal discounts.

The system 111 sorts in-bound mail received by the enterprise. Many mailings include return envelopes. The return envelopes may include tracking marks, e.g. in bar code form, that enable the system to correlate in-bound mail to the original finished mail pieces. The sorter 111 sorts all incoming mail, e.g. by department. Many such systems have the capability to detect codes on incoming mail pieces, including any such codes used to identify responses to the outgoing mail pieces. The sorting system 111 thus offers an opportunity to capture response data and enter that data together with the other tracking data and the on-line document presentment data. Although not shown in this first drawing, other mail handling systems may process in-bound mail and provide related tracking data, for example, systems to image, endorse and process data from incoming payment checks.

The system 100 of Fig. 2 also includes mail delivery tracking systems. In the example, the system 121 is a tracking system operated by the postal service. A commercial carrier operates the tracking system 123. These systems track mail pieces through the delivery process, from receipt by the mailer, through various internal transport stages, to final delivery to the intended recipients.

The systems 101 through 123 communicate via one or more data networks 125. The network 125 typically provides packet data communication services and may include all or portions of various private networks. Some of the communications may also transit the public data network now commonly known as the Internet. Preferred embodiments of the system 100 utilize general purpose computers in the form of servers or host computers or in the form of personal computers (PCs), for the data storage and processing and for the desired user interface. These systems also communicate via the network 125.

Hence, the routines for providing document tracking and presentment services, represented by the software system 11 of Fig. 1, run on a computer platform connected to the network 125. The hardware example of Fig. 2 assumes that this software runs on a general purpose type computer platform represented by the exemplary server 251. For example, the host computer 101 supplies document print files to the server 351. The printer 103 and the mail processing systems 107-123 supply tracking data regarding processing of the hard-copy documents to the server 351. The system 251 provides storage for the tracking data and electronic files containing soft-copy information corresponding to respective hard-copy documents processed for mail delivery. The data storage also maintains linkages between the tracking data and the stored electronic files containing the corresponding soft-copy information.

The server 251 may be operated by the enterprise that is mailing the articles, or another entity may operate the server as a host or service bureau offering the integrated solution 11 to a number of enterprise customers.

The server system 251 offers one or more users on-line access to information in the data storage, including integrated access to the tracking data for the physical articles and the files containing the corresponding electronic information based on the linkages. Those skilled in the art will recognize that the computer system 251 may run other programs and/or host a wide range of applications used by the enterprise or other entity offering the tracking and electronic presentment services. Also, each system 251 may be implemented as a single computer system or as a distributed system having multiple appearances at different nodes on the network 125.

There are many electronic formats that may be used for the electronic information presentment functions, including, for example, XML, HTML, PDF, JSP, ASP, PHP, CGI-BIN, ASCII, etc. The document file information from the source host computer system 101 may or may not be in a format that is compatible with electronic delivery. For example, if the service will offer web-based presentment via a network 125, such as the Internet, the document files often will not be in a format compatible with web presentment technologies. However the file or files from the host will contain the useful information for processing and presentment. For example, if the documents are account statements, the files will contain the relevant data regarding activities in and status of the accounts. The processing for electronic presentment of the soft-copy document information will provide any reformatting of data necessary for using web technologies or the like to deliver the electronic information. The conversion function may also convert files to a format compatible with e-mail communication.

Those skilled in the art will recognize that the storage and format conversion(s) can be done in a variety of ways. As just one example, received documents could be stored in native print format, in which case the conversion to appropriate electronic output form (e.g., XML) might be done "on the fly" as a user requests access to specific information. Alternatively, the conversions may be done as print files are received, in which case, the server 251 stores the converted files for later use. Of course, other Internet friendly protocols could be used, such as HTML or PDF, just to name two examples.

The tracking data could be stored as records, in the format(s) provided by the various mail processing devices or systems 103-123. In such a case, programming in the server would retrieve and integrate tracking data for a particular article selected or identified by a requesting user. Alternatively, the program-controlled processing by the server would parse and/or convert received tracking data and combine such data from diverse systems into a unified tracking record for each document or other type of article.

In the hardware example of Fig. 2, the user interface is provided via a client device in the form of a personal computer (PC) 351 or similar general purpose device. Although currently the most common type, those skilled in the art will recognize that the PC 351 is only one example of the types of terminal a user may operate to communicate with the server 251. Other end-user devices include portable digital assistants (PDAs) with appropriate communication interfaces, cellular or other wireless telephone devices with web or Internet access capabilities, web-TV devices, etc. The various end-user devices may connect into the network 125, via dial-up or various broadband connections or connect through a corporate Local Area Network (LAN), in order to communicate with the server 251.

The user's client PC 351 communicates with the server 251 via the network 125. Typically, the PC 351 will run a browser or similar program, which allows the user to select and view various information available via the network 125, in this case, including the tracking data and electronic presentment information from the server 251. The PC and browser may be standard, in that they need not use any specialized hardware or run any special programming, in order for the user to interact with the tracking data and presentment services offered by the server 251. Of course, the PC 351 will typically run a variety of other programs of interest to the particular user. As noted earlier, the user may be an account representative or other employee/agent of the enterprise that is mailing the articles. In which case, the PC may be owned and operated by the enterprise. However, the user may be an intended recipient, in which case the PC 351 is owned and operated by another entity, typically, one of the enterprise's customers.

It is assumed that those skilled in the art are familiar with the structure and operation of general purpose computer platforms, such as the server 251 and the client PC 351. However, for completeness, it may be helpful for some readers to consider a summary discussion here of exemplary general purpose computers.

Hence, Fig. 2 includes a functional block diagram type illustration of the hardware of a general purpose computer implementation of the server system 251, which may perform the functions of the integrated tracking and electronic document presentment service, such as that offered by the system 11 of Fig. 1. The exemplary computer system 251 contains a central processing unit (CPU) 252, memories 253 and an interconnect bus 254. The CPU 252 may contain a single microprocessor, or may contain a plurality of microprocessors for configuring the computer system 252 as a multi-processor system. The memories 253 include a main memory, a read only memory, and mass storage devices such as various disk drives, tape drives, etc. The main memory typically includes dynamic random access memory (DRAM) and high-speed cache memory. In operation, the main memory stores at least portions of instructions for execution and data for processing, by the CPU 252.

The mass storage may include one or more magnetic disk or tape drives or optical disk drives, for storing data and instructions for use by CPU 252. At least one mass storage system 255, preferably in the form of a disk drive or tape drive, stores a database for the tracking data regarding the articles processed for mail delivery. The same or another mass storage system also stores the files containing the electronic information corresponding the articles processed for mail delivery. The mass storage 255 may also include one or more drives for various portable media, such as a floppy disk, a DVD, a compact disc read only memory (CD-ROM), or an integrated circuit non-volatile memory adapter (i.e. PCMCIA adapter) to input and output data and code to and from the computer system 251.

The system 251 also includes one or more input/output interfaces for communications, shown by way of example as an interface 259 for data communications via the network 125. The interface 259 may be a modem, an Ethernet card or any other appropriate data communications device. To offer the tracking data and associated electronic document information presentment to a large number of users, the interface 259 preferably provides a relatively high-speed link to the network 125. The same or another interface provides communications between system computers, e.g. between the sever 251 and computers/processors of the host 101 and the mail processing systems 103 to 123. The physical communication links may be optical, wired, or wireless (e.g., via satellite or cellular network). Alternatively, the computer system 251 may comprise a mainframe or other type of host computer system capable of web-based communications via the network 125.

Although not shown, the system 251 may further include appropriate input/output ports for interconnection with a local display and a keyboard or the like serving as a local user interface for programming purposes. Alternatively, the server operations personnel may interact with the system 251 for control and programming of the system from remote terminal devices via the network 125 or some other data communication link.

The computer system 251 runs a variety of applications programs and stores relevant data, such as the software system 11. In server applications, one or more such application programs enable transmission of web pages for delivery of tracking data and for electronic presentment of document information via the network 125. Those skilled in the art will recognize that the computer system 251 may run other programs and/or host other web-based or e-mail based services. In some applications, the same equipment may offer regular electronic presentment and bill payment functions to customers that have established electronic billing and payment accounts. As noted above, the system 251 may be implemented as a single computer system or as a distributed system having multiple appearances at different nodes on the network 125.

Fig. 2 also includes a functional block diagram type illustration of the hardware of a PC or workstation type implementation of a user terminal system 351. The exemplary computer system 351 contains a central processing unit (CPU) 352, memories 353 and an interconnect bus 354. The CPU 352 may contain a single microprocessor, or may contain a plurality of microprocessors for configuring the computer system 352 as a multi-processor system. The memories 353 include a main memory, a read only memory, and mass storage devices such as various disk drives, tape drives, etc. The main memory typically includes dynamic random access memory (DRAM) and high-speed cache memory. In operation, the main memory stores at least portions of instructions for execution and data for processing, by the CPU 352.

The mass storage may include one or more magnetic disk or tape drives or optical disk drives, for storing data and instructions for use by CPU 352. For a home PC, for example, at least one mass storage system 355 in the form of a disk drive or tape drive, stores the operating system and application software code (browser etc.) for loading into main memory for execution as well as data including received messages and documents. The mass storage 355 within the computer system 351 may also include one or more drives for various portable media, such as a floppy disk, a DVD, a compact disc read only memory (CD-ROM), or an integrated circuit non-volatile memory adapter (i.e. PCMCIA adapter) to input and output data and code to and from the computer system 351.

The system 351 also includes one or more input/output interfaces for communications, shown by way of example as an interface 359 for data communications via the network 125. The interface 359 may be a modem, an Ethernet card or any other appropriate data communications device. The physical communication links may be optical, wired, or wireless (e.g., via satellite or cellular network).

The computer system 351 may further include appropriate input/output ports 356 for interconnection with a display 357 and a keyboard 358 serving as the respective user interface. For example, the computer may include a graphics subsystem to drive the output display 357. The output display 357 may include a cathode ray tube (CRT) display or liquid crystal display (LCD). Although not shown, the PC type system typically would include a port for connection to a printer.

The input control devices for such an implementation of the system 351 would include the keyboard 358 for inputting alphanumeric and other key information. The input control devices for the system may further include a cursor control device, such as a trackball, stylus, or cursor direction keys. In the illustrated example, the system includes a mouse 361 for cursor control and associated selection input. The mouse 361 connects via one of the I/O parts 356. The links of the peripherals 357, 358 and 361 to the system 351 may be wired connections or use wireless communications. Each computer system 351 runs a variety of applications programs and stores data, enabling one or more interactions via the user interface, provided through elements such as 357, 358 and 361, and/or over the network 125, at least to implement the user interface for the electronic access to the tracking data and corresponding electronic document information. Typically, a PC will run a collection of other application programs.

The components contained in the computer systems 251 and 351 are those typically found in general purpose computer systems used as servers, workstations, personal computers, network terminals, and the like. In fact, these components are intended to represent a broad category of such computer components that are well known in the art.

Certain aspects of the invention relate to the software elements, such as the executable code of the software system 11 and the records and files containing the tracking data and the corresponding electronic information. At different times all or portions of the executable code, tracking data and soft-copy files may reside in physical media or be carried by electromagnetic media. The various software components may reside in or be transported via a variety of different media. Physical media include the memory of the computer processing systems 251, 251, such as various semiconductor memories, tape drives, disc drives and the like of general-purpose computer systems. All or portions of the software may at times be communicated through the network 125 or various other telecommunication networks. Such communications, for example, may serve to load the software 11 from another computer (not shown), for example, into the server 351 or into any other computer system used in the document tracking and electronic presentment service. Thus, other types of media that may bear the software elements includes optical, electrical and electromagnetic waves, such as used across physical interfaces between local devices, as well as the wired and optical landline networks and various air-links that transport such carrier waves.

Terms relating to computer or machine "readable medium" as used herein refer to any medium that participates in providing instructions to a processor for execution or for carrying data to or from a processor for storage or manipulation. Such a medium may take many forms, including but not limited to, non-volatile media, volatile media, and transmission media. Non-volatile media include, for example, optical or magnetic disks, such as in any of the storage devices in the systems of Fig. 2. Volatile media include dynamic memory, such as main memory. Transmission media include coaxial cables; copper wire and fiber optics, including the wires that comprise a bus within a computer system. Transmission media can also take the form of electric or electromagnetic signals, or acoustic or light waves such as those generated during radio frequency (RF) and infrared (IR) data communications. Various forms of computer or machine readable media may be involved in carrying one or more sequences of one or more instructions or data to a processor for execution or processing.

The access methodology may link on-line presentment of electronic information to tracking data obtained from various systems that prepare items for mailing, handle the items during shipment through the actual mail stream or even handle corresponding return mail. The on-line service can present information and related hard-copy tracking data, for example, to a representative of a sender or mailer of the hard-copy items or to intended recipients and/or respondents.

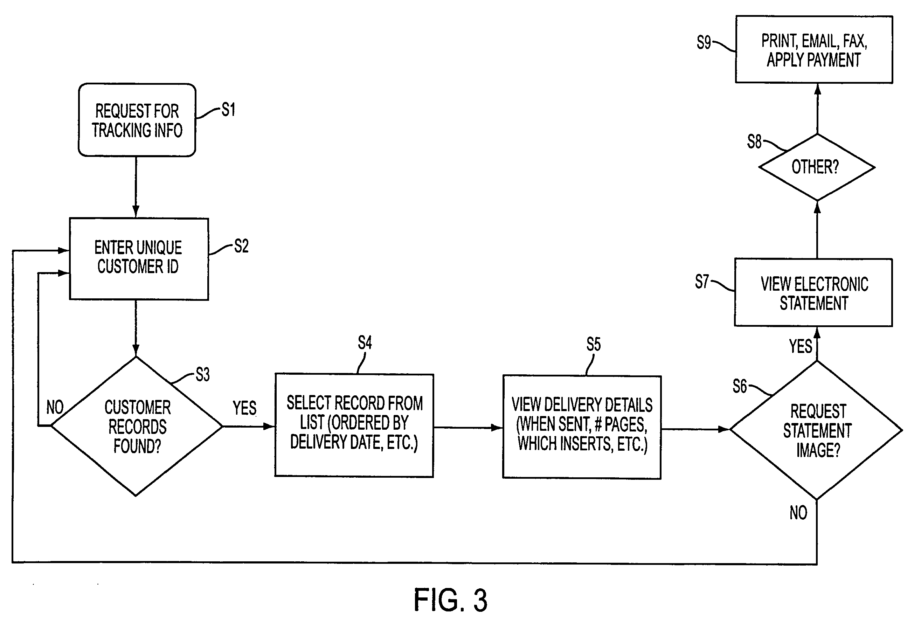

The systems and software discussed above can offer a variety of procedures for accessing the linked tracking data and electronic presentment information. In the example of Fig. 3, the integrated access process begins with a request for tracking data regarding a selected item, received from the user. The system 11 may offer a number of options for a user to select a particular item. The user may be given options to search for a particular document for which to view tracking information. Search criteria can be account number, customer, processing date/time, processing facility, or any of the other known data points of interest to the particular enterprise and/or its customers.

In the example, a user requests tracking information (at S1) and enters a unique customer ID (S2). The system uses that ID to determine if there are any document records associated with that ID (S3). If so, the system presents a list of the documents found, and the user selects a particular record of interest (S4).

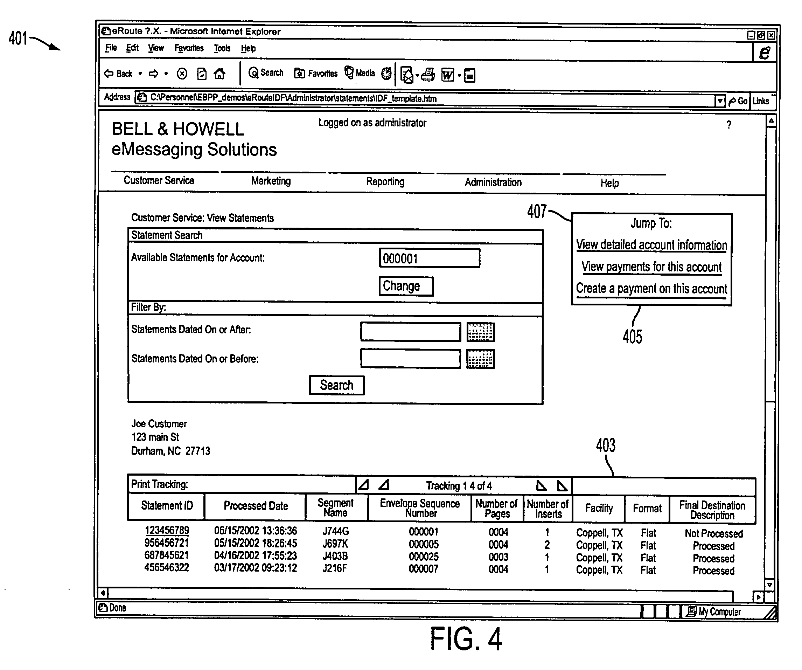

Fig. 4 is an exemplary first User View, in which the user receives a listing of all documents or other items that have been sent or are in process for sending to the particular recipient, e.g. the person corresponding to the identified account. In the flow chart of Fig. 3, the system presented a list of the documents found, and in step S4 the user selects a particular record of interest. Based on the selection, the system 11 provides a web page display of delivery tracking details (S5).

In a variant shown in Fig. 4, the initial User View 401 lists (at 403) all the statements for an identified customer account, and the list shows some tracking data for each listed statement, such as date/time of processing, number of pages, number of inserts, and facility. Identification information, such as segment name and envelope sequence number may also be included in the tracking data. In the example of Fig. 4, the last field to the right of the listing 403 indicates status, in this case, as processed or not processed. More or fewer data fields and/or fields of different types will be provided in different systems or different enterprise applications depending on the needs of the enterprise and/or the relevant tracking data that is available for processing.

Each mail-piece tracking record has a link to a statement image or to processed information from that image. In the example of Fig. 4, the user highlights a statement on the list 403 using a cursor control and selection input. A menu 405 provides several user options relating to the account and/or the selected statement. At least one menu option is link to on-line presentment regarding the selected document. In the example, the first link 407 in the menu 405 enables viewing of detailed account information, typically obtained by processing of the print file for the user-selected document. This or another link could lead to an actual file containing an image of the document in or convertible to an appropriate on-line viewing format. In this example, the menu 405 also offers other options, such as an option to view a payment history and an option to create a new payment (e.g. to pay the latest bill).

Upon presenting the requested tracking data to the user (S5 in Fig. 3), the user may select the link to the soft-copy information corresponding to the selected item. If the user does not select to view a statement image, then step S6 causes a branch back to step S2, in which the system is expecting a user input of another customer ID. In response to a user activation of a link (e.g. link 407 in the view of Fig. 4), which indicates a request to view an image of the statement identified in step S5, the branching at step S6 leads to step S7. In step S7, the system enables the user to via at least some electronic information of the corresponding soft-copy statement.

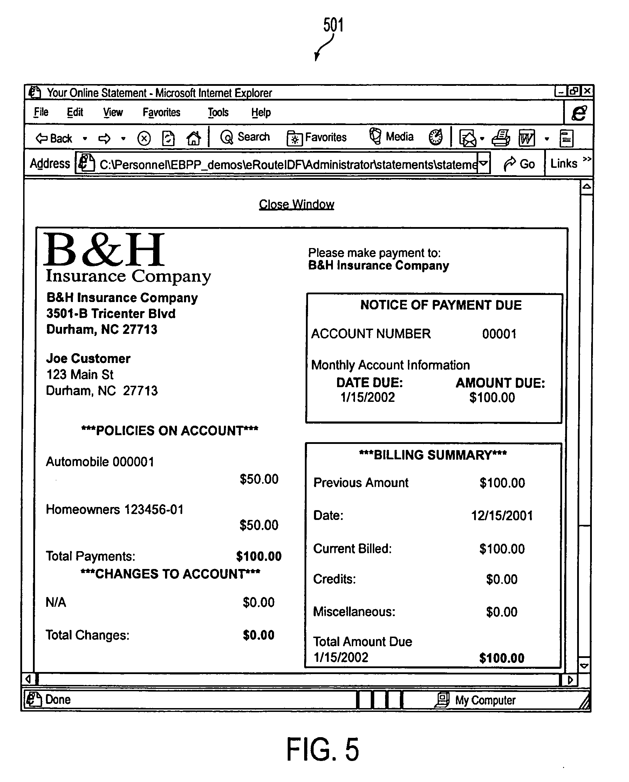

Fig. 5 shows the User View 501 that is presented if the user selects the first link 407 from the menu 405 in the view 401 of Fig. 4. Essentially, activation of the first link 407 from the menu 405 causes the system to provide a display of the processed image data (in HTML or PDF format) derived from the document print file. In the flow-chart of Fig. 3, the system offers additional options (S8). Hence, from the view shown in Fig. 5, the user can view only, print to a local printer, email, fax, apply payment, etc. The flow (Fig. 3) concludes after step S9 in which the system performs the selected additional function with regard to the statement image.

In the example of Fig. 5, the image presented is one derived from processing the data contained in the account statement. Alternatively, the system could provide an image that has substantially the same appearance as the print document. If the system includes a camera to take a picture of the finished envelope, the system would also offer the user the option to view that image.

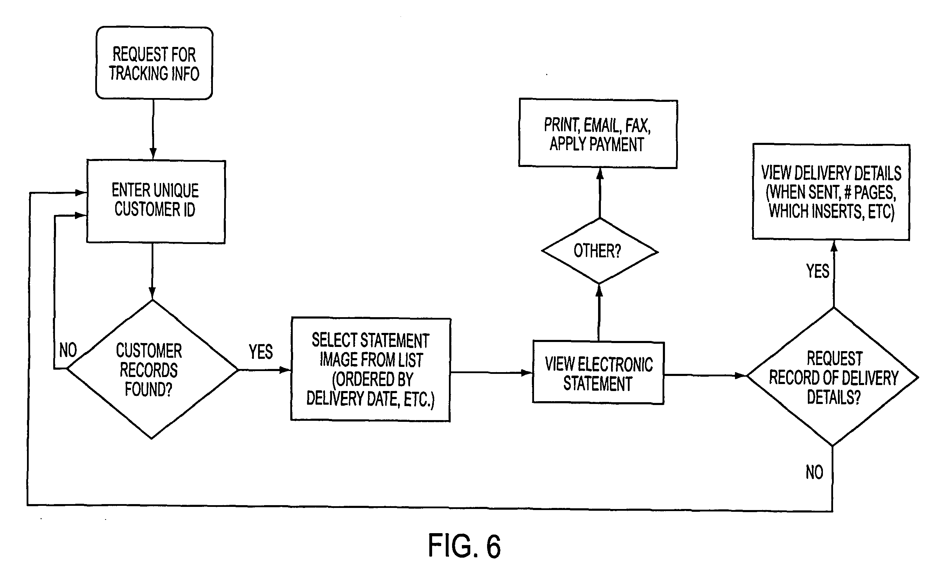

In the process discussed above relative to Figs. 3-5, the user viewed the tracking information and then linked to the electronic information. It should be noted that those steps of the processing could be reversed, e.g. so that the user searches for a particular on-line image or other type of electronic presentment information, and then the user clicks the link to view integrity tracking information regarding the associated physical article. This second approach is shown in the flow-chart of Fig. 6. In view of the detailed discussion of Figs. 3-5, it is believed that the illustration of the modified processing shown in Fig. 6 should be self-explanatory. Of course, there are other variants that may allow the user to access both the tracking data and the information from the corresponding soft copy file. Another approach is for the user to search for the account, and the account view would offer links to both services.

The drawings and the description above are given by way of example, as a detailed disclosure of presently envisioned embodiments of the integrated article tracking and electronic presentment service. While the foregoing has described what are considered to be the best mode and/or other preferred embodiments, it is understood that various modifications may be made therein and that the invention or inventions disclosed herein may be implemented in various forms and embodiments, and that they may be applied in numerous applications, only some of which have been described herein. It is intended by the following claims to claim any and all modifications and variations that fall within the true scope of the present concepts.

## Claims

1. A method, for providing electronic access to tracking data regarding articles processed for mail delivery and to electronic information corresponding to the articles processed for mail delivery, the method comprising:
during processing of the articles for mail delivery, storing tracking data regarding the processing of the articles through one or more stages of the processing for mail delivery;
storing files containing electronic information corresponding to respective ones of the articles processed for mail delivery;
for each respective article, linking the stored tracking data for the respective article to the stored file containing the electronic information corresponding to the respective article; and
providing electronic access for a user to stored tracking data for an identified one of the articles and to the electronic information corresponding to the identified article via the linking therebetween.

2. The method as in claim 1, wherein the step of providing electronic access enables access for a representative of a sender of the articles.

3. The method as in claim 1, wherein the step of providing electronic access enables on-line presentment of the tracking data and of the corresponding electronic information regarding the identified article to an intended recipient of the identified article.

4. The method as in claim 1, wherein:
the processing of the articles for mail delivery comprises a plurality of article finishing steps for preparing the articles for mail delivery; and
the tracking data indicates progress of each article through each of the article finishing steps and integrity of each article at least one of the article finishing steps.

5. The method as in claim 1, wherein:
the processing of the articles for mail delivery comprises handling the articles for delivery to intended recipients; and
the tracking data indicates progress of each article through stages of delivery.

6. The method as in claim 1, wherein:
the processing articles for mail delivery comprises handling respective response delivery articles corresponding to the articles for mail delivery; and
the tracking data indicates whether or not a response delivery article corresponding to each article has been returned.

7. The method as in claim 1, wherein the step of providing electronic access comprises:
receiving a request for tracking data regarding the identified article from the user;
electronically presenting the tracking data regarding the identified article to the user;
receiving from the user an indication of selection of the link to the electronic information corresponding to the identified article; and
electronically presenting to the user at least some of the electronic information corresponding to the identified article.

8. The method as in claim 7, wherein the presented information comprises a soft-copy of at least one document page of the identified article.

9. The method as in claim 7, wherein the presented information comprises selected processed information derived form processing of the electronic information corresponding to the identified article.

10. The method as in claim 7, wherein the presented information comprises a catured image of the identified article as finished for mail delivery.

11. The method as in claim 1, wherein the step of providing electronic access comprises:
receiving a request from the user for at least some of the electronic information corresponding to the identified article;
electronically presenting the requested information to the user;
receiving from the user an indication of selection of the link to the tracking data regarding the article corresponding to the requested information; and
electronically presenting the tracking data regarding the corresponding article to the user.

12. The method as in claim 11, wherein the requested information electronically presented to the user comprises a soft-copy image of at least one document page of the identified article.

13. The method as in claim 11, wherein the requested information electronically presented to the user comprises selected processed information derived form processing of the electronic information corresponding to the identified article.

14. The method as in claim 11, wherein the requested information electronically presented to the user comprises a captured image of the identified article as finished for mail delivery.

15. The method of claim 1, wherein the step of storing files containing electronic information corresponding to respective ones of the articles processed for mail delivery comprises:
receiving print files each for at least one document part of each of the articles processed for mail delivery;
converting the print files to a format compatible with web communication via a data network; and
storing the converted print files.

16. A program product, comprising executable code transportable by at least one machine readable medium, wherein execution of the code by at least one programmable computer causes the at least one programmable computer to perform the steps of the method of claim 1.

17. A data processing system programmed to perform the steps of the method of claim 1.

18. A program product transportable by at least one machine readable medium, the product comprising:
article records containing tracking data regarding processing of the articles through one or more stages of mail delivery processing;
files containing electronic information corresponding to respective ones of the articles processed for mail delivery; and
links between article records and corresponding electronic files, to enable integrated access to tracking data for each article and electronic information corresponding to each article.

19. The product of claim 18, further comprising a program executable by a programmable computer capable of communication via a network, for causing the computer to provide on-line access to the tracking data in the article records and the corresponding electronic information to a user via the network.

20. A system for providing electronic access to tracking data regarding articles processed for mail delivery and to electronic information corresponding to the articles processed for mail delivery, the system comprising:
a mail processing system, for processing the articles for mail delivery, wherein the mail processing system provides tracking data regarding its processing of each of the articles;
data storage, for storing:
1) the tracking data,
2) files containing electronic information corresponding to respective ones of the articles processed for mail delivery, and
3) linkages between the stored tracking data for each respective article and the stored file containing the electronic information corresponding to the respective article; and
at least one programmed computer system for providing a user with on-line access to information in the data storage, including integrated access to the tracking data for the articles and the corresponding electronic information based on the linkages.

21. The system of claim 20, wherein the mail processing system comprises one or more systems selected from the group consisting of: a printer, an inserter system, a sorter system and a mail delivery system.

22. A method, for providing electronic access to tracking information regarding hard-copy documents processed for print mail delivery and to electronic information corresponding to the hard-copy documents, the method comprising:
during processing of the hard-copy documents for print mail delivery, storing process tracking data regarding processing of each of the hard-copy documents through one or more stages of the processing for print mail delivery;
storing electronic information corresponding to respective ones of the hard-copy documents processed for print mail delivery;
for each respective hard-copy document, linking the stored tracking data for the respective hard-copy document to the corresponding stored electronic information; and
providing electronic access for a user to stored tracking data for an identified hard-copy document and to stored soft-copy electronic information corresponding to the identified hard-copy document via the linking therebetween.

23. A program product, comprising executable code transportable by at least one machine readable medium, wherein execution of the code by at least one programmable computer causes the at least one programmable computer to perform the steps of the method of claim 22.

24. A data processing system programmed to perform the steps of the method of claim 22.

25. A program product transportable by at least one machine readable medium, the product comprising:
records containing process tracking data regarding tracking of processing of hard-copy documents intended for print mail delivery through one or more stages of processing for print mail delivery;
files containing electronic information corresponding to respective ones of the hard-copy documents processed for print mail delivery; and
links between records and corresponding electronic files, to enable integrated access to tracking data for each respective hard-copy document and the corresponding electronic information.

26. The product of claim 25, further comprising a program executable by a programmable computer capable of communication via a network, for causing the computer to provide on-line access to the tracking data in the records and the corresponding electronic information in the stored files to a user via the network.

27. A system for providing electronic access to soft-copy document information and to tracking information regarding hard-copy documents processed for print mail delivery, the system comprising:
a print mail processing system, for processing hard-copy documents for print mail delivery, wherein the print mail processing system provides tracking data regarding its processing of each of the hard-copy documents through one or more processing stages;
data storage, for storing:
4) the tracking data,
5) electronic files containing soft-copy document information, corresponding to respective ones of the hard-copy documents processed for print mail delivery, and
6) linkages between the hard-copy documents and stored electronic files containing the corresponding soft-copy document information; and
at least one programmed computer system for providing a user with on-line access to information in the data storage, including integrated access to tracking data for the hard-copy documents and electronic files containing the corresponding soft-copy document information based on the linkages.

28. The system of claim 27, wherein the print mail processing system comprises one or more systems selected from the group consisting of: a printer, an inserter system, a sorter system and a mail delivery system.
